Europäisches Patentamt

(19) European Patent Office

Office européen des brevets

(11) Publication number : **0 033 626**
**B1**

# (12) EUROPEAN PATENT SPECIFICATION

(45) Date of publication of patent specification :
21.03.84

(21) Application number : **81300339.9**

(22) Date of filing : **26.01.81**

(51) Int. Cl.³ : **B 23 P 21/00// B23P19/04**

(54) Aerosol container closures.

(30) Priority : **01.02.80 US 112791**

(43) Date of publication of application :
**12.08.81 Bulletin 81/32**

(45) Publication of the grant of the patent :
**21.03.84 Bulletin 84/12**

(84) Designated contracting states :
**AT BE CH DE FR GB IT LI LU NL SE**

(56) References cited :
**AU-B- 423 893**
**FR-A- 2 150 229**
**US-A- 3 342 381**
**US-A- 3 417 177**
**US-A- 3 443 006**
**US-A- 3 509 599**
**US-A- 3 971 785**
**US-A- 4 028 459**

(73) Proprietor : **Abplanalp, Robert Henry**
**10 Hewitt Avenue**
**Bronxville New York 10708 (US)**

(72) Inventor : **Abplanalp, Robert Henry**
**10 Hewitt Avenue**
**Bronxville New York 10708. (US)**

(74) Representative : **Moss, Bernard Joseph et al**
**D.Young & Co. 10 Staple Inn**
**London, WC1V 7RD (GB)**

Jouve, 18, rue St-Denis, 75001 Paris, France

Aerosol container closures

Aerosol dispensing containers have found widespread use in the packaging of fluid Materials including a variety of both liquid and powdered particulate products. Such containers are provided with a valve-controlled discharge orifice and operate by the action of a volatile propellant which is confined within the container together with the product to be dispensed. Because the propellant has an appreciable vapour pressure at room temperature, the product in the closed container is maintained under superatmospheric pressure.

A typical aerosol unit comprises a hollow cylindrical container which is tightly closed at one end and is provided with an opening at its opposite end for receiving a dispensing valve assembly. A closure, commonly referred to as a mounting cup, serves as the closure for the container and as a support for the valve assembly. Typically, the mounting cup comprises a panel having an aperture for receiving the valve assembly a skirt depending from the periphery of the panel, and an annular channel extending outwardly from the edge of the skirt. When the mounting cup is placed in sealing position on the container, the channel is positioned over the bead surrounding the container opening and the lower portion of the skirt adjacent to the channel is flared outwardly against the container wall adjacent the bead. To ensure adequate sealing between the closure and the container, the cup is provided with a gasket which may reside in the annular channel or predominantly in the channel of the cup.

Heretofore, mounting cup gasket seals have been formed by disposing a previously cut gasket in the channel. This type of gasket has the disadvantage of not being stationary relative to the mounting cup during propellant filling or other valve unit assembly operations with the undesirable consequence that when the mounting cup and container are clinched to effect the seal, the gasket is often disposed at an angled position, and thus, the clinching operation is less effective.

Another commercial method for forming the gasket onto the mounting cup consists in forming the gaskets in situ from liquid gasket-forming compositions comprising an elastomer dispersed or dissolved in a volatile organic liquid vehicle. In the manufacture of such a gasket, the liquid composition is deposited in the desired configuration in the channel of the cup while the cup is rotated beneath a metering nozzle through which the composition flows. The deposit is then converted into a dry solid sealing mass by expelling the liquid vehicle at elevated temperatures. Though this technique of flowing gaskets into place has received wide commercial acceptance, it suffers from the disadvantages of requiring an elaborate drying operation, wherein the mounting cup must be handled carefully so as to avoid undue upset from the horizontal : costly recovery apparatus for the expelled organic liquid also must be provided. In sum, the flowed gasket is an expensive step in the formation of the mounting cup. See US Patent No. 3,342,381 as an example of the « flowed » gasket.

Other techniques for disposing a gasket on the mounting cup are described in US Patent No. 3,417,177 wherein the gasket seal is made of heat shrinkable material. After placing a band of gasket material on the skirt, the gasket having a greater diameter than the outside diameter of the skirt of the mounting cup, the cup is heated at a temperature and for a time sufficient to shrink the band into tight frictional engagement with the skirt.

Another similar technique is that disclosed in US Patent No. 3,443,006 wherein a band of gasket material is swelled through the use of a suitable swelling agent so as to increase its diameter to fit over the skirt of the mounting cup. Subsequently, the swelling agent is removed from the gasket material so that the band will come into tight frictional engagement with the skirt.

Both the heat shrink and swelling techniques for applying a gasket material to the mounting cup have the disadvantages of being costly and relatively time consuming procedures. Note in US Patent No. 3,417,177, Col. 4, lines 27-31 that the positioned bands must be heated to 115 °C (240 °F) for about 2-3 minutes in order to obtain a tight friction fit. In the procedure described in US Patent No. 3,443,006 the bands must stand in the swelling liquid for a period of 1/2 to 1 1/2 minutes (according to example 2) and then allowed to stand for the drying period. Also in any mass production utilizing this procedure, an organic liquid recovery system must be employed.

Australian Patent Specification No. 423,893 describes a mounting cup comprising a panel, a skirt depending from the periphery of the panel, an annular channel extruding outwardly from the lower edge of the skirt, and a gasket secured exclusively on the outer surface of the skirt and extending upwardly for a distance from the lower edge of the skirt which merges with the channel.

French Patent Specification No. 2 150 229 describes a means for cutting off sections of inflated fabric tubing and comprising two plugs within the tubing one of which can reciprocate relative to the other and co-operating exterior grippers which open and close alternately whereby the tubing is pushed forward to a cutting position and held there while being transversely cut.

In accordance with the present invention there is provided apparatus for mounting a gasket on a valve mounting cup for an aerosol container, the cup having a panel (12), a skirt (14) depending from the periphery of the panel and an annular channel (18) extending outwardly from the skirt, the apparatus comprising :
   a) means (36) (100) for positioning the mounting cup at a predetermined station,

b) a mandrel (32) (80) having a first portion (44) (82) fixed in position with respect to the positioned mounting cup and a second portion (42) (84) reciprocally movable with respect to the mounting cup and the fixed portion of the mandrel,

c) means for advancing a continuous sleeve of gasket material on to the mandrel,

d) means for (38) (90, 92, 94) for aligning the mandrel and the skirt of the positioned mounting cup and positioning the mandrel a desired distance from the skirt,

e) means (46) (96) for urging the movable second portion of the mandrel toward the mounting cup, thereby advancing the sleeve of gasket material onto the skirt of the mounting cup.

f) means (64, 88) for returning the movable second portion of the mandrel to its initial position,

g) means (50) (102) for cutting the sleeve of gasket material beyond the skirt of the mounting cup to form a band of gasket material on the skirt of the mounting cup, and

h) means (116) for advancing the gasket band along the skirt, such that the band of gasket material enters the cup channel and does not extend beyond the skirt.

Also in accordance with the present invention there is provided a method for mounting a gasket on a mounting cup for an aerosol container, the mounting cup having a panel, a skirt depending from the periphery of the panel and an annular channel extending outwardly from the skirt, the method comprising :

a) axially aligning and positioning, at a distance from each other, the skirt (14) of the mounting cup and a mandrel member (32) which supports a sleeve of gasket material and has fixed and movable portions with respect to the mounting cup,

b) advancing the movable portion (42) (86) of the sleeve-bearing mandrel toward the mounting cup so as to advance the sleeve of gasket material onto the skirt of the mounting cup,

c) returning the movable portion of the mandrel to its initial position, while retaining the sleeve in its advanced position and cutting the gasket sleeve between the mounting cup and the mandrel so as to form a band of gasket material on the mounting cup, and

d) subsequently, advancing the band of gasket material along the skirt of the mounting cup such that the band of gasket material does not extend beyond the skirt.

The invention will now be particularly described with reference to the accompanying drawings wherein :

Figure 1 shows, in section, a gasketed aerosol mounting cup prepared by the method and apparatus of this invention.

Figures 2 A-F show schematically one embodiment of the invention in several steps utilized in positioning the gasket material onto an aerosol mounting cup.

Figure 3 is a perspective view of the apparatus of the embodiment of Figure 2 together with the apparatus used in a second operation on the product of the embodiment of Figure 2.

Figure 4 is a sectional view of the apparatus of the embodiment of Figure 2. along the line 4-4 of Figure 3.

Figure 5 is a partial section of the apparatus used in the second operation on the product of the embodiment of Figure 2. along the line 5-5 of Figure 3.

Figure 6 is a timing diagram through a single cycle for producing the mounting cup according to the embodiment of Figure 2.

Figure 7 is a perspective view of a second embodiment of the invention.

Figures 8 and 9 are views of the apparatus of the embodiment of Figure 7, showing the positioning of the apparatus in an initial and advanced position, respectively, relative to the mounting cup.

Figures 10-13 are sectional views of a mounting cup prepared by this invention and an associated container in unseated, seated and clinched relationships, respectively.

Figure 14 is a partial sectional view of a second embodiment of the apparatus used in the second operation on the products resulting from the operation of Figure 2 A-F or Figure 7.

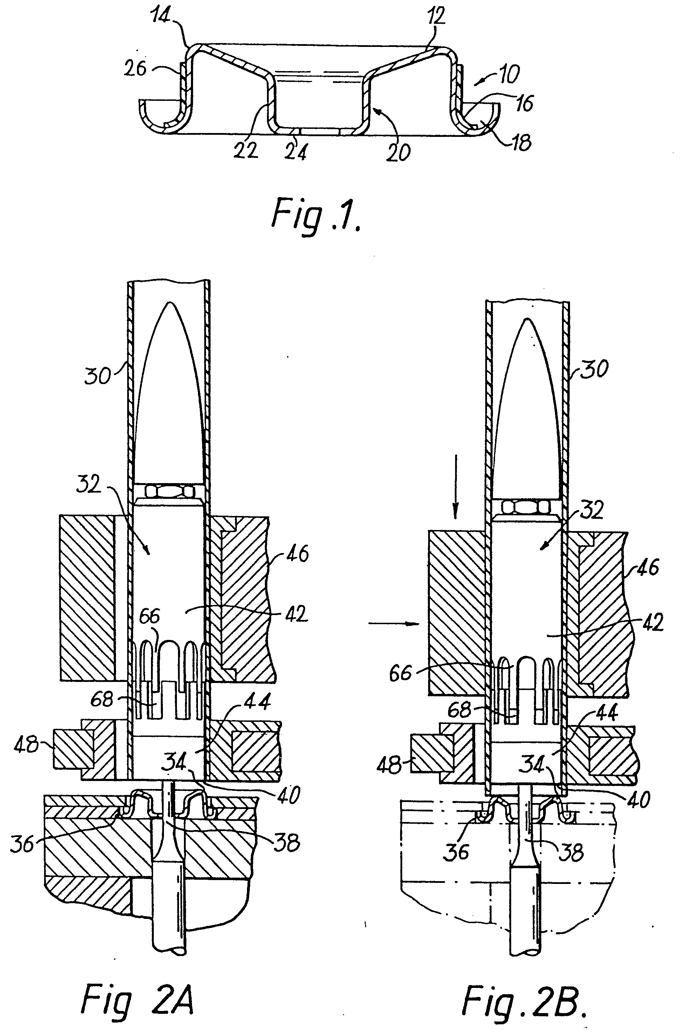

Figure 1 is a sectional view of a gasketed-mounting cup shown in inverted position relative to connection with an assembled container and produced according to the general method heretofore described. The mounting cup, generally designated as 10, comprises a circular panel 12 having an integral skirt 14 depending from its periphery. The free edge of skirt 14 is out-wardly flanged at 16 to form an annular channel 18 for embracing a bead surrounding the container opening (not shown) then the cup is positioned thereon. The inner portion of panel 12 is countersunk to form a tubular rim, generally designated as 20, which has a dependant circular wall 22 integrally joined with an apertured horizontal wall 24. When the cup is placed in sealing position, the rim 20 acts as a pedestal for the valve unit and the valve stem is admitted into the container through apertured wall 24. The gasket 26 is disposed on the exterior surface of the skirt 14 and extends beyond the juncture of the skirt and channel and a distance into said channel.

In Figures 2 A-F, corresponding parts in each figure are as numbered and described in Figure 2A, said figures showing schematically the relative positioning of the moving components of the apparatus at each stage of the cycle in advancing a plastic gasket material onto a mounting cup and cutting the tube to ultimately provide a band of gasket material disposed on the skirt of the mounting cup.

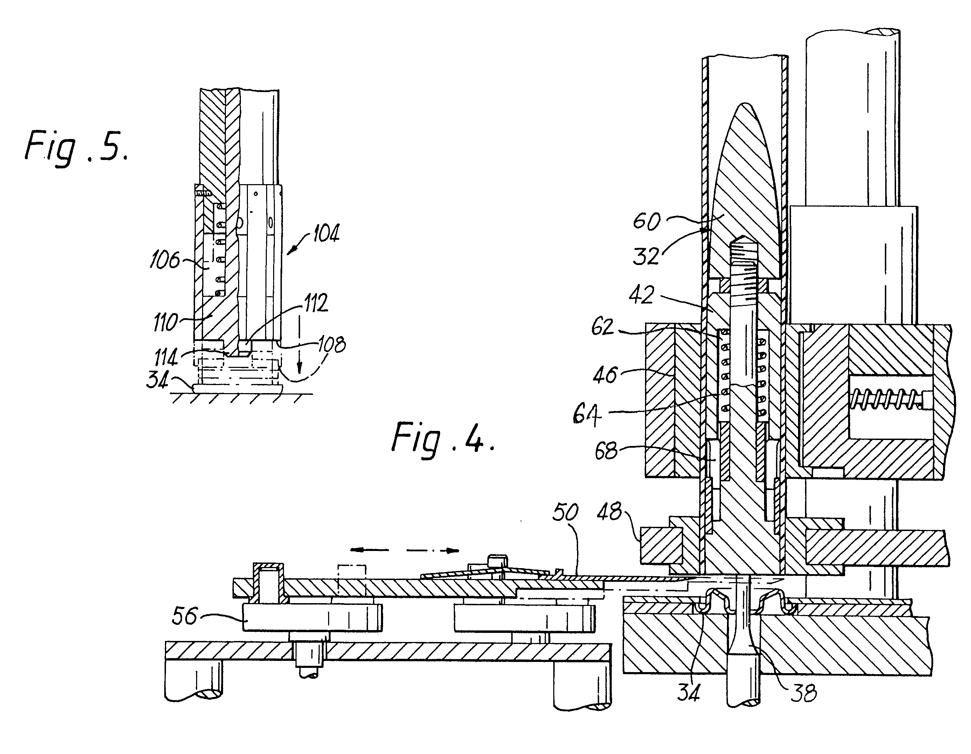

In Figure 2A, a sleeve of gasket material 30 is disposed over the length of a mandrel, generally designated as 32. Mounting cup 34 is securely positioned within a seat 36, which is mounted on a suitable base, in a manner know to those skilled in the art. Positioning pin 38 extends through the central aperture in the pedestal of the mounting cup 34 and provides a fixed spacing between the bottom surface 40 of the mandrel 32 and the mounting cup 34. Mandrel 32 has an upper portion 42 and a lower portion 44 which are retractably collapsible relative to each other (the structure of which is more fully described in Figure 4). An upper and lower gripping member is provided at 46 and 48, respectively.

Figure 2A, the initial stage of a single cycle, shows the mandrel 32 disposed atop the positioning pin 38, with the mandrel 32 having the gasket material disposed at the initial cycle stage, i.e. terminating at the bottom surface 40 of the mandrel 32. Both gripping members, 46 and 48, are in an open position.

In Figure 2B, the upper gripping member 46 closes about the mandrel 32 and subsequently moves the upper portion 42 of the mandrel 32, toward the mounting cup 34. By this motion, the gasket material 30 is moved past the stationary bottom surface 40 of the lower portion 44 of the mandrel 32.

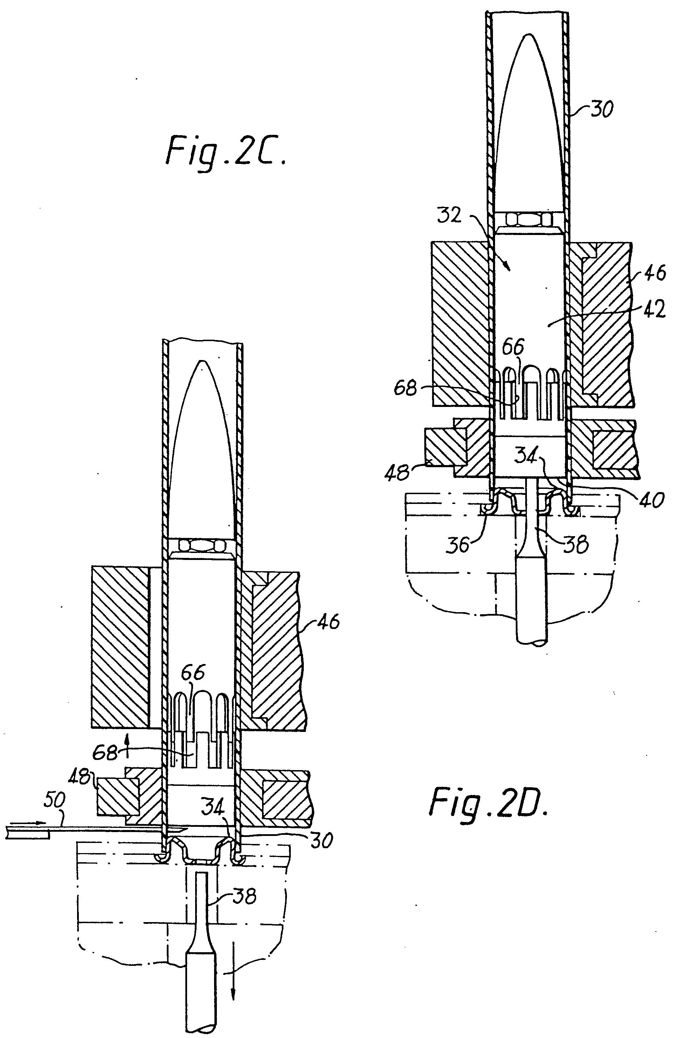

In Figure 2C, the gasket material is first disposed on the skirt of the mounting cup 34 the desired distance, and subsequently, the lower gripping member 48 engages the lower portion 44 of the mandrel 32.

At the next stage of the cycle, Figure 2D, the upper gripping member 46 releases allowing the upper portion 42 of the mandrel 32 to return to its original position. At the same time the positioning pin 38 is lowered beneath the mounting cup 34 and thereafter a cutter 50 (slown only in Figure 2D) is passed through the gasket material 30.

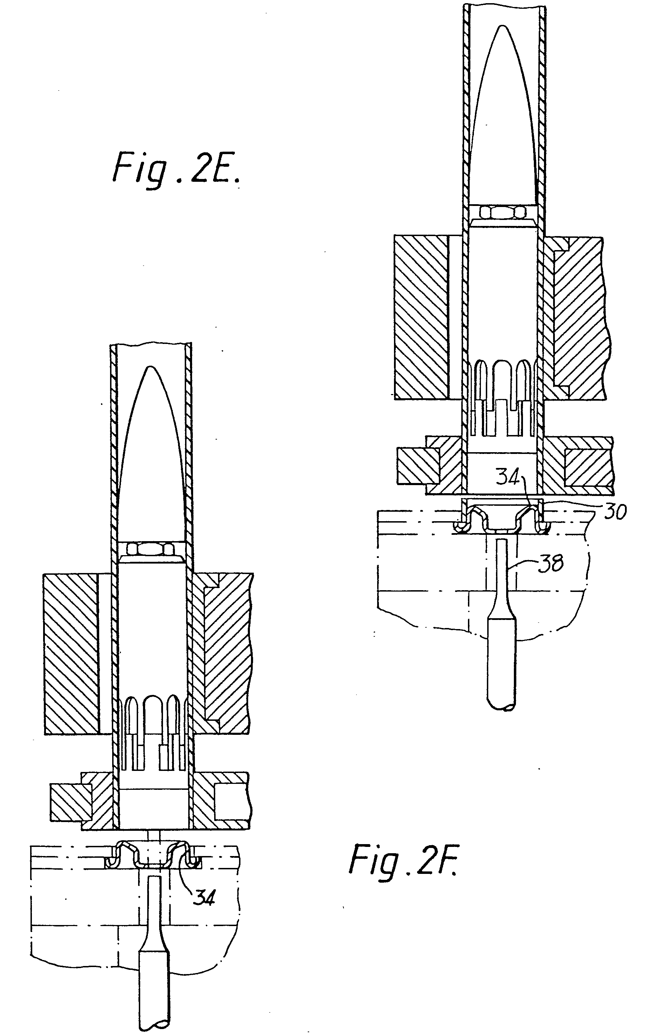

Figure 2E, shows a mounting cup with a band of the gasket material 30 on the skirt of the mounting cup.

At the next stage, Figure 2F, the bottom gripper 48 is closed on the bottom portion 44 of the mandrel 32 and positioning pin 38 is moved to the position shown in Figure 2A, after which the gripper 48 is released and the system is at the initial stage shown in Figure 2A.

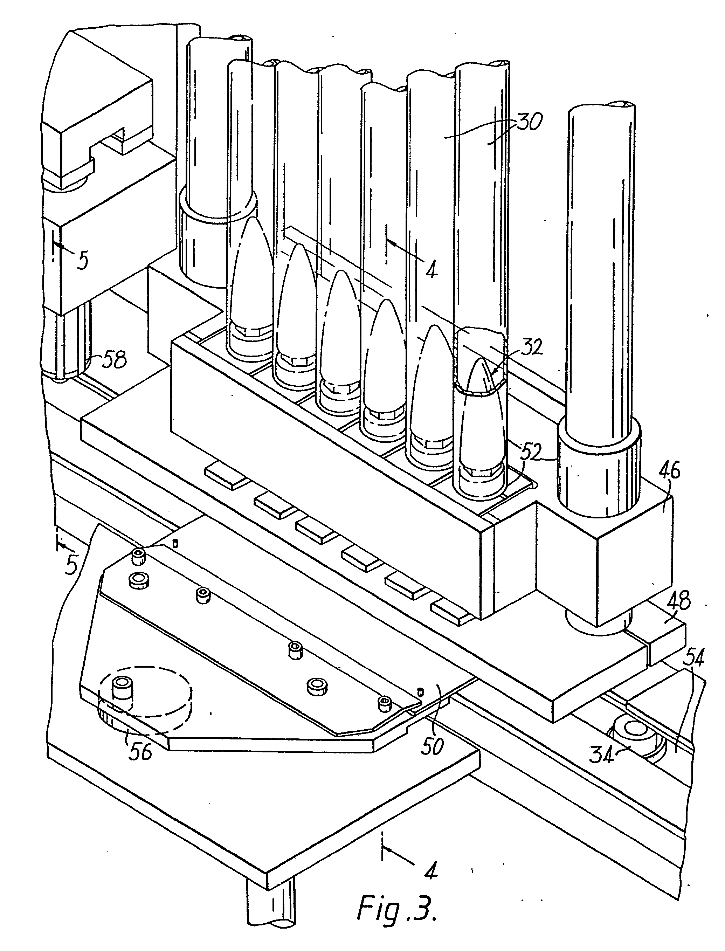

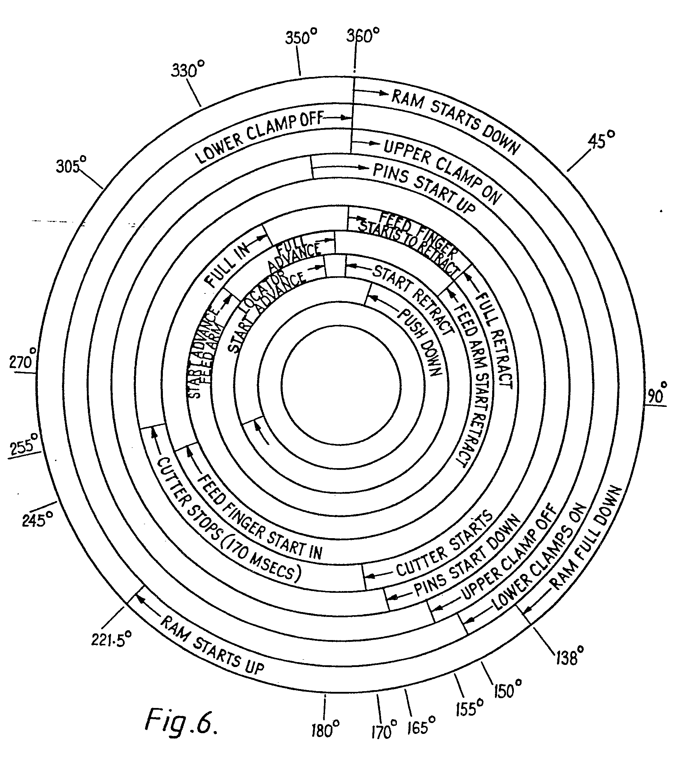

Figure 3 shows a six-station gasket-mounting cup assembly. The gasket material 30 is fed from individual rolls (not shown) of said material. Upper gripping member 47 has a series of openings 52 which receive the mandrels 32. The bottom gripping member is 48. Mounting cups 34 are fed through a raceway 54 to a position beneath each of the mandrels 32. Not shown for reason that it is known to those skilled in the art, is the structure which transports, here six, a given number of mounting cups alonge the raceway 52 to their respective positions in vertical alignment which each associated mandrel. In the timing chart of Figure 6, these structures are referred to as the feed finger, feed arm and locator device. Cutter 50 is mounted on a rotating wheel 56 in such a manner as to impart an elliptical motion as the cutting edge advances and retreats during the cutting cycle. After the mounting cup has received the gasket material 30, the cup is moved to a station whereat a hollowed bottom plunger 58, shown in more detail in Figure 5, advances over the skirt of the mounting cup and urges the gasket material 30 along the skirt.

Figure 4 shows in more detail the structure of a single mandrel-mounting cup station of the embodiment shown in Figure 3. The upper portion 42 of the mandrel 32 has part with a tapered upper surface 60 which is screwed onto the upper portion 42, the shape of the portion 60 facilitating the passing of the gasket material onto the mandrel 32. Further, the upper portion 42 of the mandrel 32 has a cavity 62 in which is disposed a spring 64. Shown best in Figures 2 A-F are the plurality of fingers 66 which form the bottom end of the upper portion 42 of the mandrel 32, and the plurality of recesses 68 in lower portion 44 of the mandrel 32, and which are aligned to receive the fingers 66 when the upper portion of the mandrel 32 is moved toward the lower portion of the mandrel.

The upper gripping member 46 is a conventional chuck which is connected to a reciprocating ram such that it may rapidly advance and retreat from the mounting cup and when gripping the upper portion of the mandrel move said portion toward the mounting cup.

The lower gripping member 48 is a conventional chuck.

The cutting edge 50 is mounted in a conventional manner and proscribes an elliptical path in its advance and retreat from the mounting cup 34.

Figure 5 shows a reciprocating plunger, the lower outer shoulder of which engages the upper edge of the gasket material and urges it further onto the skirt of the mounting cup. In Figure 5, the plunger, generally designated as 104, has a lower hollow portion 106, terminating in shoulder 108. Set within the lower portion 106 is springloaded centering pin 110, having a protuberance 112. The protuberance 112 has a bevelled terminating portion 114 which mates with and centres the mounting cup 34 by contacting the sloped panel 12 of the mounting cup.

Figure 6 describes a timing cycle that is suitable for the six-station unit shown in Figure 3. In Figure 6, the « clamp » is a gripping member, « pins » the positioning pins, « feed finger » and « feed arm » are a conventional mechanism for advancing six mounting cups per cycle to be positioned to receive the gasket material.

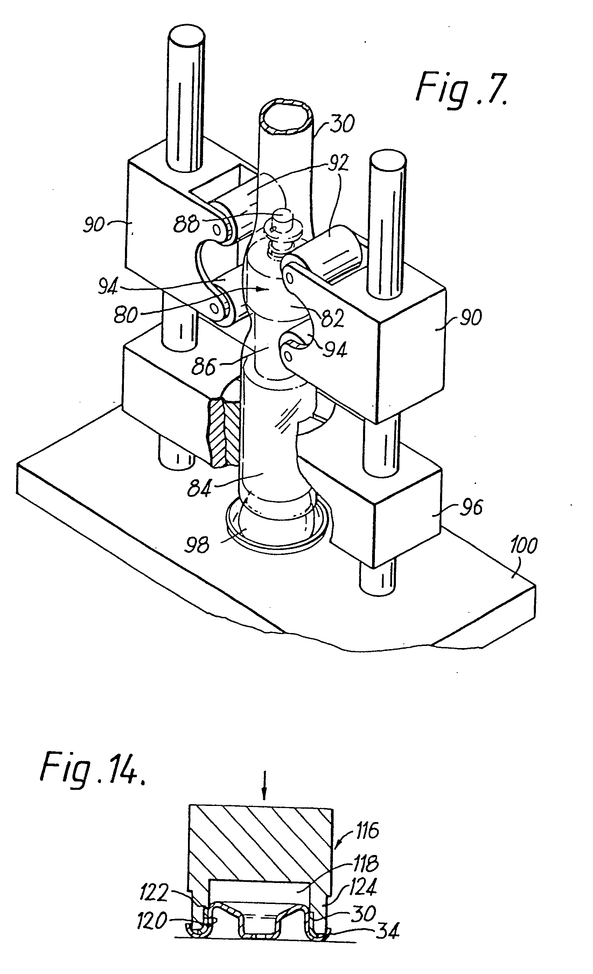

A second embodiment of the mandrel-gripper arrangement is shown in Figures 7-9. This embodiment offers the improvement of simplified construction avoiding the need for a positioning pin passing through the central opening in the mounting cup. In the perspective view of Figure 7, the gasket material 30 is passed over a mandrel, generally designated as 80. The mandrel 80 has an upper portion 82 and a lower portion 84, the latter having recessed portion 86 and upper extension 88 which passes through upper portion 82, said upper extension 88 being resiliently mounted against the upper surface of portion 80. Upper gripping member 90 has upper and lower sets of rollers 92 and 94, respectively, said rollers being adjusted against upper mandrel portion 82 so as to preclude movement of mandrel portion 82. The lower gripping member 96 is of conventional chuck design and has means, not shown, for reciprocally advancing the lower gripping member toward the mounting cup. The mounting cup 98 is affixed in a suitable holding device on the base 100.

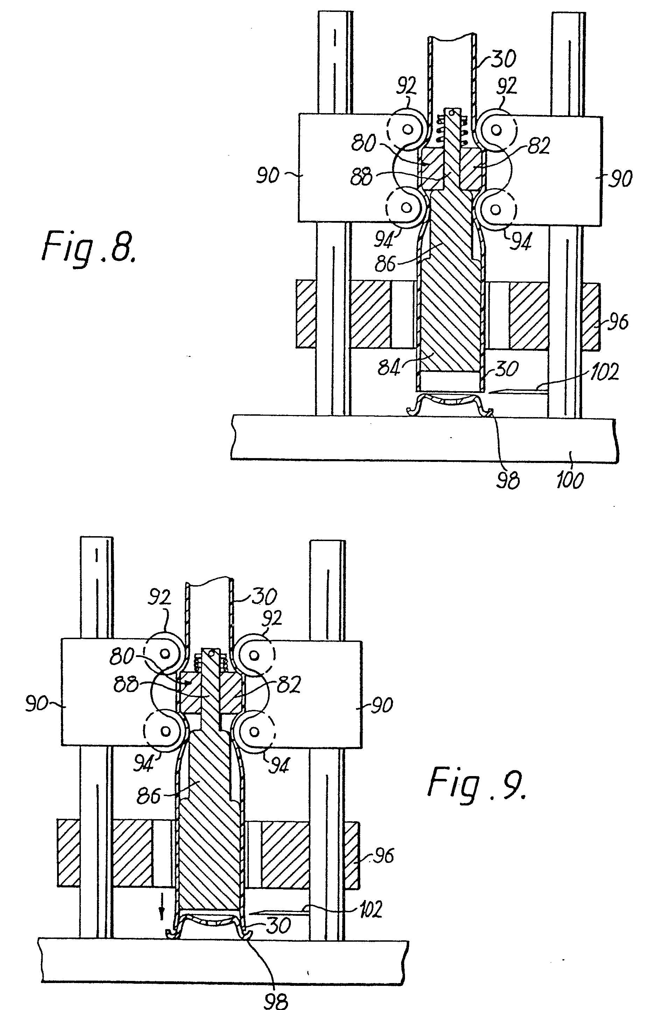

Figure 8 shows the mandrel-gripper arrangement of the embodiment of Figure 7 in initial position for starting the gasket material onto the mounting cup. The gasket material 30 extends beyond the mandrel portion 84, a short distance (6.35 mm (1/4″) has been found satisfactory). Figure 9 shows the lower gripper 96 closed onto the mandrel portion 84. Moving the lower gripper 96 toward the mounting cup 98, advances the gasket material 30 onto the skirt of the mounting cup. The nature of the gasket material is such that as the mandrel portion 84 is advanced toward the mounting cup, the gasket material 30 passes through the rollers 92 and 94 of the upper gripping member 90. After the gasket material has been placed onto the skirt of the mounting cup, the lower gripping member 96 is released and the mandrel portion 84 returns to the initial position shown in Figure 8 ; the cycle is then ready to be repeated. After the return of the mandrel portion 84, the cutting edge 102 advances to sever the gasket material. After cutting, the mounting cup is passed to a station (see Figure 5), whereat the gasket material 30 is advanced further onto the skirt of the mounting cup. The single mandrel of Figures 7-9 may, as with the embodiment of Figures 2-5, form one element of a multiple mandrel-gripping member arrangement.

To form a friction fit between gasket material and the skirt of the mounting cup, the inside diameter of the sleeve of the gasket material is slightly less than the outside diameter of the skirt portion of the mounting cup. Conventionally, the so-called I inch aerosol mounting cups have a skirt diameter of 24.892.25-146 mm (0.980-0.990″). It has been found that gasket material having a thickness of 0.43 mm (0.017) is satisfactory. To accommodate this thickness of gasket, mounting cup having a skirt diameter of 24.13 mm (0.950) inches have been used.

While any plastic gasket material having sufficient resiliency may be used, provided however, that there is compatability between the container contents and the plastic material, it has been found that a plastic comprising low density polyethylene (density range of 0.916-0.922) having a 5-15 % polyisobutylene in the molecular weight range of 40,000-200,000, plus stabilizers usually used with polyethylene in the environment in which the gasket material will reside, provides a satisfactory gasket material over a broad product range.

The apparatus and process of this invention provides a means for the mass production of a gasketed-mounting cup. The gasketed-mounting cup comprises a sleeve of gasket material which extends along a substantial portion of the skirt of the mounting cup onto at least a portion of the channel of said cup. Advancing the sleeve of gasket material into the channel of the mounting cup, may require relieving stresses in the plastic material which will cause the plastic sleeve to retreat from the channel and creep back onto the skirt of the mounting cup. It has been found that heating prior or during the advance of the plastic sleeve onto the skirt will relieve stresses. Heating, for example, by induction heating, the mounting cup to 54-60 °C (130-140 °F) has been found satisfactory. It has also been found that the aforesaid stresses may be relieved through a combination of heating and applied force on the gasket material in the channel of the mounting cup.

Figure 14 shows a novel plunger structure for applying force to the gasket material residing in the channel of the mounting cup.

In Figure 14, the reciprocating plunger is generally designated as 116. The lower hollow portion 118 of the plunger 116 has a recess portion 120 on the inner wall of the plunger 116 providing shoulder 122 and portion 124 extending from the recess portion 120. In operation, the plunger 116 moves toward the mounting cup 34 such that the shoulder 122 engages the gasket material 30 and urges it over the skirt of the mounting cup 34 until the portion 124 bottoms against the channel of the mounting cup 34. During the bottoming, a compressive force is transmitted to the gasket material within the channel of the mounting cup 34.

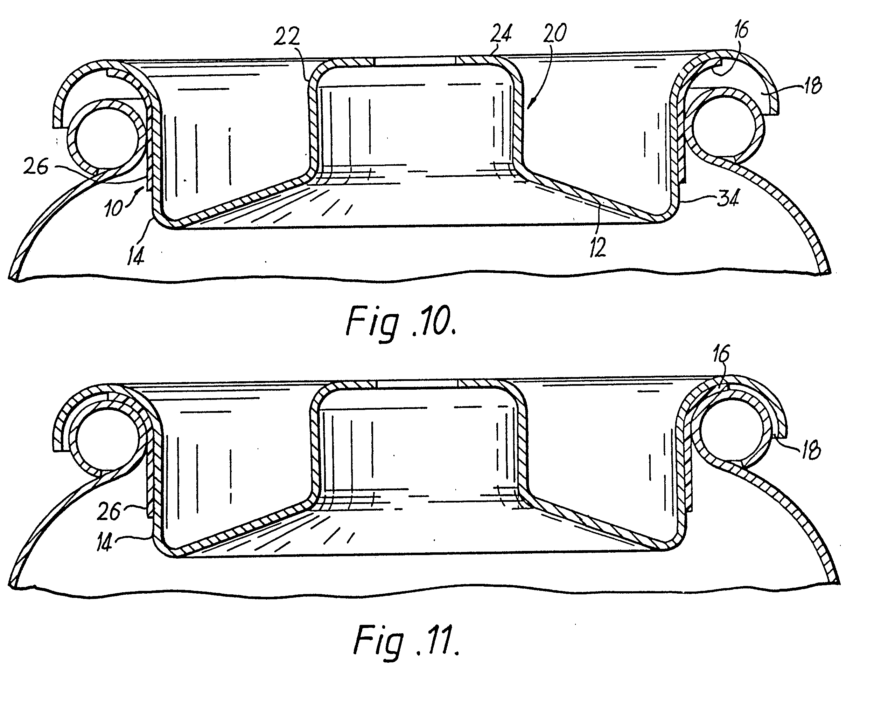

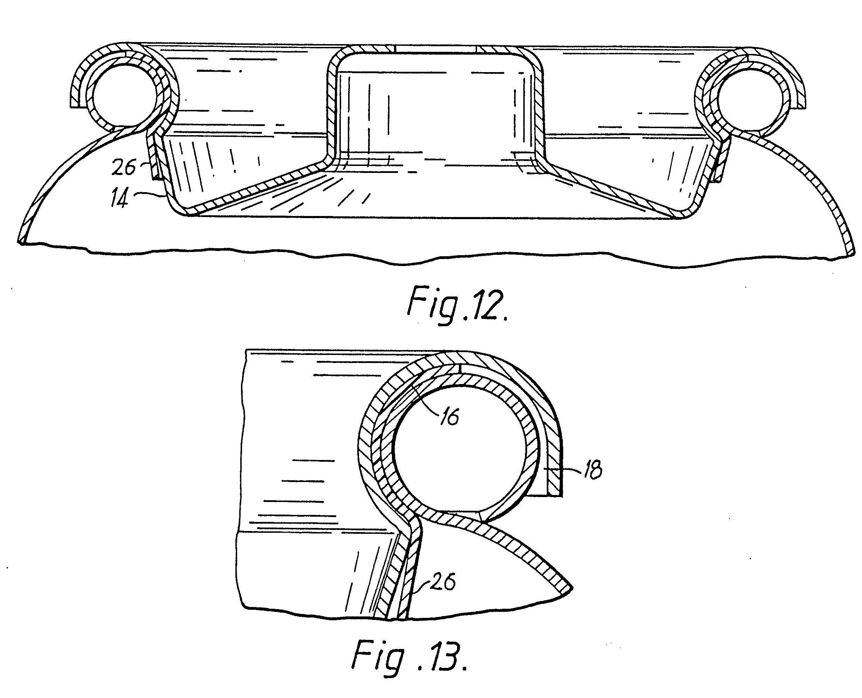

Figures 10-13 further illustrate and describe the novel mounting cup in its sealing relation with an aerosol container.

Figure 10 shows the gasket mounting cup being positioned onto the bead of an aerosol container.

Figure 11 shows the mounting cup and container bead in position just prior to clinching the mounting cup by outwardly extending the vertical skirt portion of the mounting cup.

In contrast to mounting cups having gasket material only along the skirt portion of the cup, the cup of this invention, by having gasket material from the point of clinch between the cup and the container bead as well as extending the gasket material onto the channel, provides a mounting cup having superior sealing characteristics. Also, the gasket of the mounting cup is substantially uniform in thickness throughout prior to clinching to the container, whereas the « flowed-in » type gasket of the prior art is nonuniform, thinning toward the outer edge of the channel and where the skirt and channel intersect. Uniform thickness provides a better seal.

## Claims

1. Apparatus for mounting a gasket on a valve mounting cup for an aerosol container, the cup having a panel (12), a skirt (14) depending from the periphery of the panel and an annular channel (18) extending outwardly from the skirt, the apparatus comprising :

a) means (36) (100) for positioning the mounting cup at a predetermined station,

b) a mandrel (32) (80) having a first portion (44) (82) fixed in position with respect to the positioned mounting cup and a second portion (42) (84) reciprocally movable with respect to the mounting cup and the fixed portion of the mandrel,

c) means for advancing a continuous sleeve of gasket material on to the mandrel,

d) means (38) (90, 92, 94) for aligning the mandrel and the skirt of the positioned mounting cup and positioning the mandrel a desired distance from the skirt.

e) means (46) (96) for urging the movable second portion of the mandrel toward the mounting cup, thereby advacing the sleeve of gasket material onto the skirt of the mounting cup,

f) means (64, 88) for returning the movable second portion of the mandrel to its initial position,

g) means (50) (102) for cutting the sleeve of gasket material beyond the skirt of the mounting cup to form a band of gasket material on the skirt of the mounting cup, and

h) means (116) for advancing the gasket band along the skirt, such that the band of gasket material enters the cup channel and does not extend beyond the skirt.

2. Apparatus according to claim 1, wherein the means for advancing the sleeve of gasket material includes a gripping member (46, 48) (90, 96) for each of the mandrel portions, which gripping members are operable to grip and release their respective portions of the mandrel and the surrounding parts of the sleeve independently of each other.

3. Apparatus according to claim 2, wherein the gripping member for the second portion of the mandrel is attached to a member which is capable of reciprocating so as to effect movement of the said mandrel portions.

4. Apparatus according to any of claims 1-3, wherein the means for returning the second portion of the mandrel to its initial position comprises a member biasing the mandrel portions away from the other.

5. Apparatus according to claim 4, wherein the said returning means is a spring within the mandrel which biases the mandrel portions away from each other.

6. Apparatus according to any of claims 1-5, wherein the second portion of the mandrel has a tapered end (60) for receiving the sleeve of gasket material.

7. Apparatus according to any of claims 1-6, wherein the portions of the mandrel have a plurality of fingers (66) and recesses (68) respectively which are mated so as to enable the two portions to move in telescope-like manner toward each other.

8. Apparatus according to any of claims 1-7, wherein the reciprocating second portion (42) of the mandrel is that part of the mandrel remote from the mounting cup.

9. Apparatus according to claim 1 or 2, wherein the movable second portion (86) of the mandrel is nearer the mounting cup station than the first portion (82) and has a part (88) which extends through and terminates beyond the first portion ; the first portion having a reduced diameter relative to the diameter of the movable portion, and further wherein the means for returning the mandrel to its initial position is disposed between opposite surfaces of the extended part of the movable portion and the fixed portion.

10. Apparatus according to claim 9 as dependent on claim 2, wherein a reciprocating member is attached to the gripping member of the second portion of the mandrel.

11. A method for mounting a gasket on a mounting cup for an aerosol container, the mounting cup having a panel (12), a skirt (14) depending from the periphery of the panel and an annular channel (18) extending outwardly from the skirt, the method comprising :

a) axially aligning and positioning, at a distance from each other, the skirt (14) of the mounting cup and a mandrel member (32) which supports a sleeve of gasket material and has fixed and movable portions with respect to the mounting cup,

b) advancing the movable portion (42) (86) of the sleeve-bearing mandrel toward the mounting cup so as to advance the sleeve of gasket material onto the skirt of the mounting cup,

c) returning the movable portion of the mandrel to its initial position, while retaining the sleeve in its advanced position and cutting the gasket sleeve between the mounting cup and the mandrel so as to form a band of gasket material on the mounting cup, and

d) subsequently, advancing the band of gasket material along the skirt of the mounting cup such that the band of gasket material does not extend beyond the skirt.

12. A method according to claim 11, wherein the fixed portion (44) of the mandrel is the portion of the mandrel nearest to the mounting cup and the movable portion (42) of the mandrel is furthest from the mounting cup.

13. A method according to claim 12, wherein the positioning of the fixed portion of the mandrel relative to the skirt of the mounting cup is maintained during part of the process cycle by extending a retractable (38) supporting member through an aperture in the panel of the mounting cup.

14. A method according to claim 11, wherein the fixed portion of the mandrel (82) is positioned furthest from the mounting cup and the movable portion (86) of the mandrel is nearest to the mounting cup.

15. A method according to any of claims 11-14, wherein the advancement of the movable portion of the mandrel is effected by a reciprocating member (46, 96) having means by which it is releasably connected to the said movable portion of the mandrel.

16. A method according to any of claims 11 to 15 wherein the band of gasket material is advanced along the skirt of the mounting cup to an extent such that it lies partly within the annular channel and partly around the skirt.

17. A method according to claim 16 wherein the band is advanced to extend through at least one quarter of the area of the channel.

18. A method according to claim 17 wherein the band is advanced to extend through at least one half of the area of the channel.

**Ansprüche**

1. Vorrichtung zum Aufbringen einer Dichtung auf einer Ventilmontagekappe für einen Aerosolbehälter, wobei die Montagekappe eine Querwand (12), eine vom Umfangsrand der Querwand herabragende Umfangswand (14) und einen von der Umfangswand radial nach außen verlaufenden Ringkanal (18) hat und die Vorrichtung aufweist :

a) Mittel (36) (100) zum Positionieren der Montagekappe in einer vorbestimmten Station,

b) einen Dorn (32) (80) mit einem relativ zur positionierten Montagekappe feststehenden ersten Teil (44) (82) und einem relativ zur Montagekappe und dem feststehenden Teil des Dorns hin- und herbewegbaren zweiten Teil (42) (84),

c) Mittel zum Aufschieben einer kontinuierlichen Hülse aus Dichtungsmaterial auf den Dorn,

d) Mittel (38) (90, 92, 94) zur gegenseitigen Ausrichtung von Dorn und Umfangswand der positionierten Montagekappe und zum Positionieren des Dorns in einem gewünschten Abstand von der Umfangswand,

e) Mittel (46) (96) zum Drücken des bewegbaren zweiten Teils des Dorns in Richtung auf die Montagekappe, so daß die Hülse aus Dichtungsmaterial über die Umfangswand der Montagekappe geschoben wird,

f) Mittel (64, 88) zum Rückstellen des bewegbaren zweiten Teils des Dorns in seine Ausgangslage,

g) Mittel (50) (102) zum Durchschneiden der Hülse aus Dichtungsmaterial außerhalb der Umfangswand der Montagekappe, um ein Band aus Dichtungsmaterial auf der Umfangswand der Montagekappe zu bilden, und

h) Mittel (116) zum Vorschieben des Dichtungsbandes längs der Umfangswand, so daß das Band aus Dichtungsmaterial in den Kappenkanal eintritt und sich nicht über die Umfangswand hinaus erstreckt.

2. Vorrichtung nach Anspruch 1, bei der die Mittel zum Vorschieben der Hülse aus Dichtungsmaterial einen Klemmteil (46, 48) (90, 96) für jeden der Dornteile aufweist und die Klemmteile so betätigbar sind, daß sie ihre jeweiligen Teile des Dorns und die sie umgebenden Teile der Hülse unabhängig voneinander einklemmen und freigeben.

3. Vorrichtung nach Anspruch 2, bei der der Klemmteil für den zweiten Teil des Dorns an einem hin- und herverschiebbaren Glied so angebracht ist, daß eine Verschiebung der Dornteile bewirkt wird.

4. Vorrichtung nach einem der Ansprüche 1 bis 3, bei der das Mittel zum Rückstellen des zweiten Teils des Dorns in seine Ausgangslage ein die Dornteile auseinander drückendes Glied aufweist.

5. Vorrichtung nach Anspruch 4, bei der das Rückstellmittel eine Feder in dem Dorn ist, die die Dornteile auseinander drückt.

6. Vorrichtung nach einem der Ansprüche 1 bis 5, bei der der zweite Teil des Dorns ein sich verjüngendes Ende (60) zur Aufnahme der Hülse aus Dichtungsmaterial aufweist.

7. Vorrichtung nach einem der Ansprüche 1 bis 6, bei der die Teile des Dorns jeweils mehrere Finger (66) und Ausnehmungen (68) aufweisen, die so aneinander angepaßt sind, daß die beiden Teile teleskopartig in Richtung aufeinander verschiebbar sind.

8. Vorrichtung nach einem der Ansprüche 1 bis 7, bei der der hin- und herverschiebbare zweite Teil (42) des Dorns derjenige Teil des Dorns ist, der von der Montagekappe abgekehrt ist.

9. Vorrichtung nach Anspruch 1 oder 2, bei der der bewegbare zweite Teil (86) des Dorns näher bei der Montagekappenstation als der erste Teil (82) liegt und einen Teil (88) aufweist, der sich durch den ersten Teil hindurch erstreckt und jenseits des ersten Teils endet ; der erste Teil einen geringeren Durchmesser als der bewegbare Teil aufweist und das Mittel zum Rückstellen des Dorns in seine Ausgangslage zwischen den sich gegenüberliegenden Oberflächen der Verlängerungsteils des bewegbaren Teils und des feststehenden Teils angeordnet ist.

10. Vorrichtung nach Anspruch 2 und 9, bei der ein hin- und herverschiebbares Glied am Klemmteil des zweiten Teils des Dorns angebracht ist.

11. Verfahren zum Aufbringen einer Dichtung auf einer Montagekappe für einen Aerosolbehälter, wobei die Montagekappe eine Querwand (12), eine vom Umfangsrand der Querwand herabragende Umfangswand (14) und einen von der Umfangswand radial nach außen verlaufenden Ringkanal (18) aufweist und das Verfahren beinhaltet :

a) ein axiales Ausrichten und Positionieren der Umfangswand (14) der Montagekappe und eines eine Hülse aus Dichtungsmaterial tragenden und einen relativ zur Montagekappe feststehenden und einen relativ zur Montagekappe beweglichen Teil aufweisenden Dorns (32) in einem Abstand voneinander,

b) ein Vorschieben des beweglichen Teils (42) (86) des die Hülse tragenden Dorns in Richtung auf die Montagekappe, so daß die Hülse aus Dichtungsmaterial auf die Umfangswand der Montagekappe vorgeschoben wird,

c) ein Rückstellen des beweglichen Teils des Dorns in seine Ausgangslage, während die Hülse in ihrer vorgeschobenen Lage gehalten und zwischen Montagekappe und Dorn durchgeschnitten wird, so daß ein Band aus Dichtungsmaterial auf der Montagekappe gebildet wird, und

d) ein anschließendes Vorschieben des Bandes aus Dichtungsmaterial längs der Umfangswand der Montagekappe, so daß sich das Band aus Dichtungsmaterial nicht über die Umfangswand hinaus erstreckt.

12. Verfahren nach Anspruch 11, bei dem der feststehende Teil (44) des Dorns der am nächsten bei der Montagekappe liegende Teil des Dorns ist und der bewegbare Teil (42) des Dorns am weitesten von der Montagekappe entfernt ist.

13. Verfahren nach Anspruch 12, bei der die Positionierung des feststehenden Teils des Dorns relativ zur Umfangswand des Montagekappe während eines Teils des Betriebszyklus aufrechterhalten wird, indem ein zurückziehbarer Stützteil (38) durch eine Öffnung der Querwand der Montagekappe vorgeschoben wird.

14. Verfahren nach Anspruch 11, bei dem der feststehende Teil des Dorns (82) von der Montagekappe am weitesten entfernt und der bewegbare Teil (86) des Dorns am dichtesten bei der Montagekappe angeordnet ist.

15. Verfahren nach einem der Ansprüche 11 bis 14, bei dem der Vorschub des bewegbaren Teils des Dorns durch ein hin- und herbewegbares Glied (46, 96) bewirkt wird, das Mittel aufweist, durch die es lösbar mit dem bewegbaren Teil des Dorns verbunden ist.

16. Verfahren nach einem der Ansprüche 11 bis 15, bei dem das Band aus Dichtungsmaterial so weit über die Umfangswand der Montagekappe vorgeschoben wird, daß es teilweise in dem Ringkanal und teilweise um die Umfangswand herum liegt.

17. Verfahren nach Anspruch 16, Bei dem das Band so weit vorgeschoben ist, daß es sich zumindest über ein Viertel der Fläche des Kanals erstreckt.

18. Verfahren nach Anspruch 17, bei dem das Band so weit vorgeschoben ist, daß es sich zumindest über die halbe Fläche des Kanals erstreckt.

**Revendications**

1. Appareillage pour mettre en place une garniture de joint sur une coupelle de montage de valve pour conteneur aérosol, la coupelle ayant un panneau (12), une jupe (14) descendant du bord extérieur du panneau et un canal annulaire (18) s'étendant vers l'extérieur à partir de la jupe, l'appareillage comprenant :

a) des moyens (36, 100) pour positionner la coupelle de montage à un endroit prédéterminé ;

b) un mandrin (32, 80) qui a une première partie (44, 82) tenue en position fixe par rapport à la coupelle de montage, elle-même positionnée et une seconde partie (42, 84) déplaçable d'une manière alternative, par rapport à la coupelle de montage et à la partie fixe du mandrin ;

c) des moyens pour faire avancer sur le mandrin un manchon continu de matière pour joint ;

d) des moyens (38, 90, 92, 94) pour aligner le mandrin et la jupe de la coupelle de montage positionnée, et positionne le mandrin à la distance désirée de la jupe ;

e) des moyens (46, 96) pour faire avancer la seconde partie mobile du mandrin vers la coupelle de montage, grâce à quoi on fait avancer le manchon de matière pour joint sur la jupe de la coupelle de montage ;

f) des moyens (64, 88) pour ramener la seconde partie mobile du mandrin à sa position initiale ;

g) des moyens (50, 102) pour couper le manchon de matière pour joint au-delà de la jupe de la coupelle de montage pour former une bande de matière pour joint sur la jupe de la coupelle de montage ; et

h) des moyens (116) pour faire avancer la bande de matière pour joint le long de la jupe, de façon qu'elle pénètre dans le canal de la coupelle et ne s'étende pas au-delà de la jupe.

2. Appareillage selon la revendication 1, caractérisé en ce que les moyens pour faire avancer le manchon de matière pour joint comprennent un organe de saisie (46, 48, 90, 96) pour chaque partie du mandrin, ces organes de saisie pouvant agir pour saisir et relâcher, indépendamment l'une de l'autre, les parties respectives du mandrin qui leur correspondent et les parties du manchon qui les recouvrent.

3. Appareillage selon la revendication 2, caractérisé en ce que l'organe de saisie de la seconde partie du mandrin est fixé à un organe qui peut se mouvoir en va-et-vient pour réaliser le déplacement des parties du mandrin.

4. Appareillage selon l'une des revendications 1 à 3, caractérisé en ce que les moyens pour ramener la seconde partie du mandrin à la position initiale comprennent un organe écartant l'une de l'autre les parties du mandrin.

5. Appareillage selon la revendication 4, caractérisé en ce que les moyens de retour à la position initiale sont un ressort placé à l'intérieur du mandrin et qui écarte l'une de l'autre les parties du mandrin.

6. Appareillage selon l'une des revendications 1 à 5, caractérisé en ce que la seconde partie du mandrin a un bout conique (60) pour recevoir le manchon de matière pour joint.

7. Appareillage selon l'une des revendications 1 à 6, caractérisé en ce que les parties du mandrin comportent respectivement plusieurs doigts (66) et logements (68) qui se correspondent de manière à permettre aux deux parties de se déplacer l'une par rapport à l'autre de manière télescopique.

8. Appareillage selon l'une des revendications 1 à 7, caractérisé en ce que la seconde partie à mouvement de va-et-vient (42), du mandrin est la partie du mandrin distante de la coupelle de montage.

9. Appareillage selon la revendication 1 ou 2, caractérisé en ce que la seconde partie mobile (86) du mandrin est plus proche de l'emplacement de la coupelle de montage que la première partie (82), et a un prolongement (88) qui traverse la première partie et se termine au-delà de celle-ci, la première partie ayant un diamètre réduit par rapport au diamètre de la partie mobile, et en ce que les moyens pour ramener le mandrin à sa position initiale sont placés entre les faces opposées du prolongement de la partie mobile et de la partie fixe.

10. Appareillage selon les revendications 2 et 9, caractérisé en ce qu'un organe à mouvement de va-et-vient est fixé à l'organe de saisie de la seconde partie du mandrin.

11. Procédé pour le montage d'une garniture de joint sur une coupelle de montage pour conteneur aérosol, la coupelle de montage ayant un panneau (12), une jupe (14) descendant du bord extérieur du panneau et un canal annulaire (18) s'étendant vers l'extérieur à partir de la jupe, le procédé étant caractérisé en ce qu'il comprend :

a) l'alignement axial et le positionnement, à une certaine distance l'une de l'autre, de la jupe (14) de la coupelle de montage et d'un organe en forme de mandrin (32) qui supporte un manchon de matière pour joint et comporte des parties fixes et mobiles par rapport à la coupelle de montage ;

b) l'avancement de la partie mobile (42, 86) du mandrin porte-manchon vers la coupelle de montage de façon à faire avancer le manchon de matière pour joint sur la jupe de la coupelle de montage ;

c) le retour de la partie mobile du mandrin à sa position initiale, cependant que le manchon est retenu dans sa position avancée, et la coupe du manchon de matière pour joint entre la coupelle de montage et le mandrin de façon à constituer une bande de matière pour joint sur la coupelle de montage ; et

d) ultérieurement, l'avancement de la bande de matière pour joint le long de la jupe de la coupelle de montage de telle façon que la bande de matière pour joint ne s'étende pas au-delà de la jupe.

12. Procédé selon la revendication 11, caractérisé en ce que la partie fixe (44) du mandrin est la partie du mandrin la plus proche de la coupelle de montage et où la partie mobile (42) du mandrin est la plus éloignée de la coupelle de montage.

13. Procédé selon la revendication 12, caractérisé en ce que le positionnement de la partie fixe du mandrin par rapport à la jupe de la coupelle de montage est assuré pendant une partie du cycle opératoire par l'extension d'un organe support rétractable (38) à travers une ouverture dans le panneau de la coupelle de montage.

14. Procédé selon la revendication 11, caractérisé en ce que la partie fixe (82) du mandrin est la plus éloignée de la coupelle de montage et où la partie mobile (86) du mandrin est la plus proche de la coupelle de montage.

15. Procédé selon l'une des revendications 11 à 14, caractérisé en ce que l'avance de la partie mobile du mandrin s'effectue grâce à un organe à mouvement de va-et-vient (46, 96) pourvu de moyens qui le relient de façon amovible à la partie mobile du mandrin.

16. Procédé selon l'une des revendications 11 à 15, caractérisé en ce que la bande de matière pour joint est avancée le long de la jupe de la coupelle de montage à un point tel qu'elle s'étende partiellement dans le canal annulaire et partiellement autour de la jupe.

17. Procédé selon la revendication 16, caractérisé en ce que la bande est avancée pour s'étendre sur au moins un quart de la surface du canal.

18. Procédé selon la revendication 17, caractérisé en ce que la bande est avancée pour s'étendre sur au moins la moitié de la surface du canal.

Fig .1.

Fig 2A

Fig .2B.

*Fig.2C.*

*Fig.2D.*

Fig.2E.

Fig.2F.

30

38

34

34

Fig.3.

Fig.5.

106
110
114
34
112
108
104

Fig.4.

60
32
42
62
46
64
68

50
48

56

34
38

0 033 626

**0 033 626**

Fig.6.

6

Fig .7.

Fig .14.

*Fig.8.*

*Fig.9.*

Fig .10.

Fig .11.

0 033 626

Fig.12.

Fig.13.